# EUROPÄISCHE PATENTSCHRIFT

(11) **EP 0 940 327 B1**
(45) Veröffentlichungstag und Bekanntmachung des Hinweises auf die Patenterteilung: **21.03.2001**
(21) Anmeldenummer: 99103483.6
(22) Anmeldetag: 23.02.1999
(51) Int. Cl.: B62D 53/08

(54) **Sattelkupplung mit Kupplungsplatte und Verschleissring**
Fifth wheel coupling with coupling plate and wear ring
Couplage de semi-remorque avec plaque de couplage et anneau d' usure

(30) Priorität: 05.03.1998 CH 52598
(43) Veröffentlichungstag der Anmeldung: 08.09.1999
(73) Patentinhaber: Georg Fischer Verkehrstechnik GmbH, 78221 Singen (DE)
(72) Erfinder: Roth-Schuler, Christian, 78224 Singen (DE); Kreutzarek, Udo, 78253 Eigeltingen (DE)
(74) Vertreter: Weiss, Wolfgang, Dr.

(56) Entgegenhaltungen:
- EP-A- 0 224 197
- EP-A- 0 616 939
- DE-A- 4 412 303

## Beschreibung

Die Erfindung betrifft eine Sattelkupplung mit einer einen Einführungsschlitz für einen Zugsattelzapfen aufweisenden Kupplungsplatte, wobei an der Kupplungsplatte ein Verschleissring mit einer Anlagefläche für den Zugsattelzapfen angeordnet ist.

Da an der Anlagestelle zwischen Zugsattelzapfen und Kupplungsplatte während des Fahrbetriebes grosse Kraftübertragungen erfolgen, unterliegt dieser Bereich der Kupplungsplatte einem grossen Verschleiss. In diesen kraftübertragenden Bereichen kann schon ein kleines Spiel zu enormen Flächenpressungen führen, so dass mit einem starken Materialverschleiss zu rechnen ist.

Deshalb ist man schon früher dazu übergegangen, in diesem Bereich einen sogenannten Verschleissring anzuordnen, der im Bedarfsfall austauschbar ist, da die Partie des Verschleissrings, die mit dem Königszapfen in Kontakt ist, höher beansprucht wird als die Sattelkupplungsplatte.

Aus der DE-B-12 02 145 ist beispielsweise ein derartiger Verschleissring bekannt geworden. Es handelt sich dabei um ein auswechselbares, kragenförmiges Verschleissegment, wobei dieses Segment von der Oberseite der Kupplungsplatte in die für den Zugsattelzapfen bestimmte Ausnehmung eingelassen wird und anschliessend mit der Kupplungsplatte verschraubbar ist.

Nachteilig bei dieser Ausführung wie auch bei den übrigen bekannten und praktizierten Verschleissringanordnungen ist die Tatsache, dass der Verschleissring mit der Kupplungsplatte verschraubt ist. Da während der Fahrt durch Unebenheiten der Strasse stark schwankende Zug- und Stosskräfte auftreten, die von den Eigenschwingungen der Kupplung noch überlagert werden, besteht die Gefahr, dass die Schraubverbindungen sich lockern und in der Folge zu gefährlichen Situationen fuhren. Bei Winkelungenauigkeit dieser querschnittlich L-förmigen Verschleissringe erhöht sich der Druck auf die Schrauben, was letztlich zu deren Bruch fuhren kann. Zudem sind Schraubverbindungen immer bearbeitungsintensiv und führen demzufolge zu höheren Kosten.

Der Erfindung liegt deshalb die Aufgabe zugrunde, eine Sattelkupplung mit einer Verschleissringanordnung der eingangs genannten Art vorzuschlagen, die einfach und wirtschaftlich hergestellt werden kann und zu einer Vereinfachung des Montagevorganges führt.

Zur erfindungsgemässen Lösung der Aufgabe führt, dass der Verschleissring einen im wesentlichen T-förmigen Querschnitt mit einem die Anlagefläche anbietenden Verschleisskörper und einem von diesem abragenden, in Einbaulage des Verschleissringes in eine Nut in der Kupplungsplatte eingreifenden Steg aufweist.

Die querschnittlich T-förmige Ausgestaltung des Verschleissringes mit einem in die Kupplungsplatte eingreifenden Steg bietet folgende Vorteile:
- Es wird mehr festigkeitsrelevantes Material in die Kupplungsplatte eingeführt.
- Der Verschleissring kann einfach eingedreht werden.
- Die Anlagefläche und damit das Kupplungsspiel zwischen Kupplungsplatte und Zugsattelzapfen ist einfach und bestimmt.
- Der Einsatz des Verschleissringes erfordert nur eine einfache Bearbeitung der Kupplungsplatte.

Bei einer bevorzugten Ausführungsform ist der Verschleisskörper im wesentlichen halbkreisringförmig ausgestaltet.

Zweckmässigerweise liegt der Verschleisskörper in Einbaulage des Verschlussringes mit einer äusseren Anlagefläche einer Gegenanlagefläche an der Kupplungsplatte an.

Besonders bevorzugt ist eine Anordnung, bei der der Verschleisskörper kreiszylindrische innere und äussere Anlageflächen mit einer gemeinsamen Zylinderachse aufweist und der Steg in einer senkrecht zur Zylinderachse liegende Ebene von der äusseren Anlagefläche des Verschleisskörpers abragt.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt schematisch in
- Fig. 1: eine Draufsicht auf eine Kupplungsplatte mit eingesetztem Verschleissring;
- Fig. 2: einen Querschnitt durch einen Teil der Anordnung von Fig. 1 entlang deren Linie I-I.

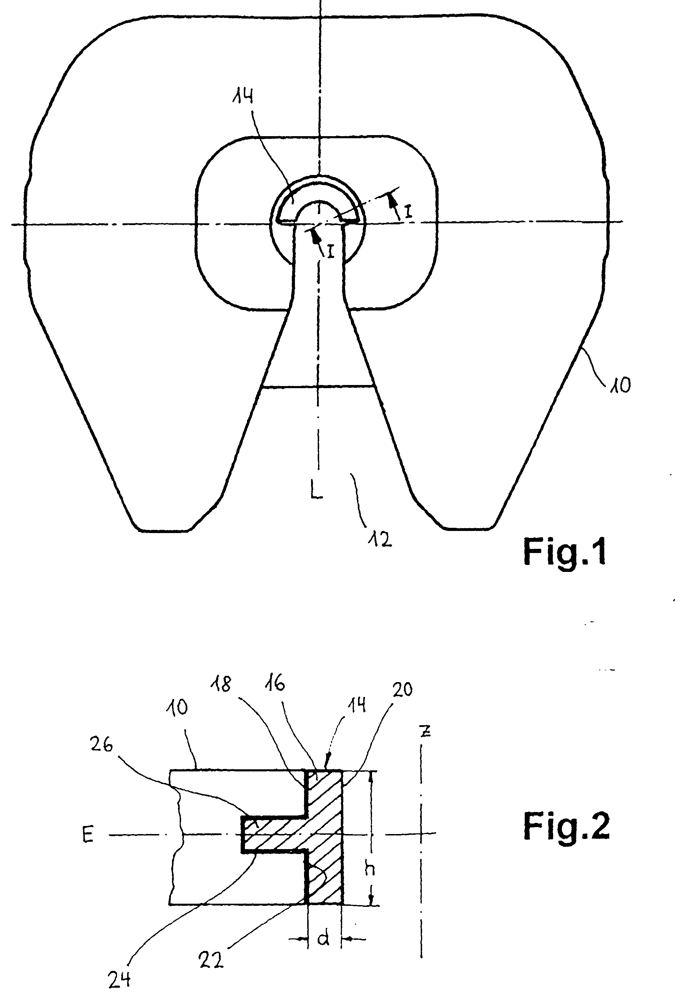

Eine in Fig. 1 dargestellte Kupplungsplatte 10 für eine Sattelkupplung weist einen in der Längsachse L angeordneten Einführungsschlitz 12 zur Einführung eines Zugsattelzapfens auf. Der Einführungsschlitz 12 ist begrenzt durch einen im wesentlichen halbkreisringförmigen Verschleissring 14, an dem der Zugsattelzapfen in eingelegter Stellung anliegt.

Gemäss Fig. 2 ist der Verschleissring 14 querschnittlich T-förmig ausgebildet und weist einen halbkreisringförmigen Verschleisskörper 16 einer Dicke d und einer Höhe h auf. Der Verschleisskörper 16 ist begrenzt durch eine kreiszylindrische äussere Anlagefläche 18 und eine kreiszylindrische innere Anlagefläche 20, die konzentrisch um eine gemeinsame Zylinderachse z angeordnet sind. Die äussere Anlagefläche 18 liegt einer ebenfalls kreiszylindrischen Gegenanlagefläche 22 an der Kupplungsplatte 10 an.

Von der äusseren Anlagefläche 18 des Verschleisskörpers 16 ragt ein kreisförmig angeordneter Steg 26 in Richtung der Kupplungsplattenebene E ab und steht in Eingriff mit einer von der Gegenanlagefläche 22 in die Kupplungsplatte 10 eingearbeiteten kreisförmigen Nut 24.

Die Einführung des Verschleissringes 14 in die Kupplungsplatte 10 erfolgt auf einfache Weise so, dass der Steg 26 im Bereich einer der Stirnseiten des Verschleissringes in der für die Aufnahme des Zugsattelzapfens bestimmten Ausnehmung in die Nut 24 eingeführt und nachfolgend der Verschleissring 14 entlang der Nut 24 in seine endgültige Position geschoben wird. Im Bedarfsfall können in der Zeichnung nicht dargestellte Fixierbolzen oder -stifte als Verdrehsicherung angeordnet werden.

Der Verschleissring kann aus irgendeinem geeigneten verschleissfesten Material gefertigt sein, wobei Stahl ein bevorzugter Werkstoff ist.

## Patentansprüche

1. Sattelkupplung mit einer einen Einführungsschlitz (12) für einen Zugsattelzapfen aufweisenden Kupplungsplatte (10), wobei an der Kupplungsplatte (10) ein Verschleissring (14) mit einer Anlagefläche (20) für den Zugsattelzapfen angeordnet ist,
**dadurch gekennzeichnet, dass**
der Verschleissring (14) einen im wesentlichen T-förmigen Querschnitt mit einem die Auflagefläche (20) anbietenden Verschleisskörper (16) und einem von diesem abragenden, in Einbaulage des Verschleissringes (14) in eine Nut (24) in der Kupplungsplatte (16) eingreifenden Steg (26) aufweist.

2. Sattelkupplung nach Anspruch 1, dadurch gekennzeichnet, dass der Verschleisskörper (16) im wesentlichen halbkreisringförmig ausgestaltet ist.

3. Sattelkupplung nach Anspruch 1 oder 2, dadurch gekennzeichnet, dass der Verschleisskörper (16) in Einbaulage des Verschleissringes (14) mit einer äusseren Anlagefläche (18) einer Gegenanlagefläche (22) an der Kupplungsplatte (10) anliegt.

4. Sattelkupplung nach einem der Ansprüche 1 bis 3, dadurch gekennzeichnet, dass der Verschleisskörper (16) kreiszylindrische innere und äussere Anlageflächen (20,18) mit einer gemeinsamen Zylinderachse (z) aufweist und der Steg (26) in einer senkrecht zur Zylinderachse (z) liegenden Ebene (E) von der äusseren Anlagefläche (18) des Verschleisskörpers (16) abragt.

## Claims

1. Fifth wheel with a coupling plate (10) having an introduction slot (12) for a fifth-wheel kingpin, a wearing ring (14) with a bearing surface (20) for the fifth-wheel kingpin being arranged on the coupling plate (10), characterized in that the wearing ring (14) has an essentially T-shaped cross section with a wearing body (16) offering the bearing surface (20) and with a web (26) which projects from said wearing body and which, when the wearing ring (14) is in the installation position, engages into a groove (24) in the coupling plate (10).

2. Fifth wheel according to Claim 1, characterized in that the wearing body (16) is of essentially semicircular design.

3. Fifth wheel according to Claim 1 or 2, characterized in that, when the wearing ring (14) is in the installation position, the wearing body (16) bears with an outer bearing surface (18) on a counter-bearing surface (22) on the coupling plate (10).

4. Fifth wheel according to one of Claims 1 to 3, characterized in that the wearing body (16) has circular-cylindrical inner and outer bearing surfaces (20, 18) with a common cylinder axis (z), and the web (26) projects from the outer bearing surface (18) of the wearing body (16) in a plane (E) lying perpendicular to the cylinder axis (z).

## Revendications

1. Sellette comprenant une plaque d'accouplement (10) présentant une fente d'insertion (12) pour un pivot d'accouplement de semi-remorque, une bague d'usure (14) comprenant une face d'appui (20) pour le pivot d'accouplement de semi-remorque étant disposée sur la plaque d'accouplement (10),
**caractérisée en ce que**
la bague d'usure (14) présente une section transversale essentiellement en forme de T avec un corps d'usure (16) offrant la face d'appui (20) et une arête (26) saillant depuis celui-ci, s'engrènant dans une rainure (24) dans la plaque d'accouplement (16), dans la position d'installation de la bague d'usure (14).

2. Sellette selon la revendication 1, caractérisée en ce que le corps d'usure (16) a une configuration essentiellement semi-circulaire.

3. Sellette selon la revendication 1 ou 2,
caractérisée en ce que le corps d'usure (16) s'appuie dans la position d'installation de la bague d'usure (14) avec une face d'appui externe (18) d'une face d'appui opposée (22) contre la plaque d'accouplement (10).

4. Sellette selon l'une quelconque des revendications 1 à 3, caractérisée en ce que le corps d'usure (16) présente des faces d'appui cylindriques circulaires interne et externe (20, 18) avec un axe cylindrique commun (z) et l'arête (26) fait saillie dans un plan (E) perpendiculaire à l'axe cylindrique (z) depuis la face d'appui extérieure (18) du corps d'usure (16).
